Europäisches Patentamt

European Patent Office

Office européen des brevets

(19)

(11) EP 1 411 412 A1

(12) # DEMANDE DE BREVET EUROPEEN

(43) Date de publication:
**21.04.2004 Bulletin 2004/17**

(51) Int Cl.$^7$: **G06F 1/08**

(21) Numéro de dépôt: **03358014.3**

(22) Date de dépôt: **10.10.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **15.10.2002 FR 0212794**

(71) Demandeur: **STMicroelectronics
92120 Montrouge (FR)**

(72) Inventeurs:
• **Ruat, Ludovic
13119 Saint Savourin (FR)**
• **Davidescu, Dragos
13100 Aix en Provence (FR)**

(74) Mandataire: **Marchand, André
OMNIPAT,
24 Place des Martyrs de la Résistance
13100 Aix-en-Provence (FR)**

(54) **Générateur d'horloge à consigne décimale et application d'un tel générateur d'horloge à un circuit UART**

(57)    L'invention concerne un générateur d'horloge programmable (CKGEN2) pour délivrer à partir d'un signal d'horloge primaire (Hs) de fréquence (Fo) déterminée un premier signal d'horloge (Hs) dont la fréquence (Fs) est égale à la fréquence (Fo) du signal d'horloge primaire divisée par une consigne M. Selon l'invention, la consigne M est un nombre décimal comprenant une partie entière M1 et une partie décimale M2, et le générateur d'horloge comprend des moyens (MODCT, DISCT, DIV1) pour moduler la période des impulsions du premier signal d'horloge (Hs) de manière que la durée de Ni impulsions successives soit sensiblement égale à M*Ni fois la période (To) du signal d'horloge primaire (Ho), Ni étant un nombre de référence pour la modulation de la période des impulsions du premier signal d'horloge.

Fig. 6

EP 1 411 412 A1

**Description**

La présente invention concerne le domaine des transmissions de données asynchrones et notamment les dispositifs de transmission de données asynchrones appelés des "UARTs" (Universal Asynchronous Receiver Transceiver).

La présente invention concerne plus particulièrement un générateur d'horloge programmable pour délivrer, à partir d'un signal d'horloge primaire de fréquence et de période déterminées, un premier signal d'horloge dont la fréquence est égale à la fréquence du signal d'horloge primaire divisée par une consigne M.

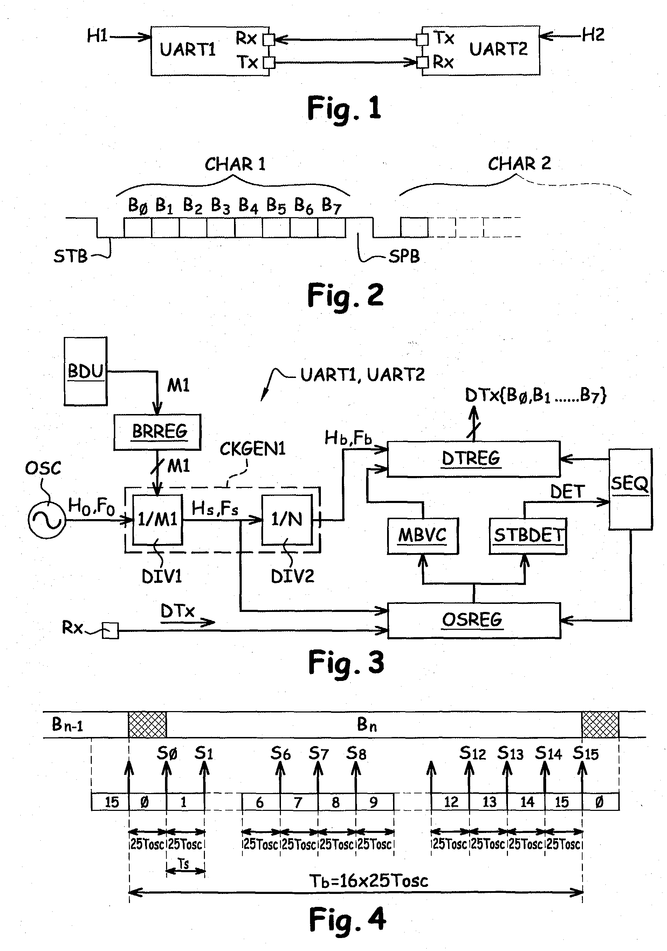

Les figures 1 et 2 illustrent schématiquement un exemple de transmission de données entre deux circuits UART (UART1, UART2). Chaque circuit UART présente une borne de transmission Tx connectée à une borne de réception Rx de l'autre circuit UART. La transmission de données consiste dans la transmission de caractères CHAR1, CHAR2... comportant chacun 8 bits de données B0 à B7 précédés d'un bit de démarrage STB (bit de "start") et suivis d'un bit de stop SPB (fig. 2).

A l'inverse des transmissions de données synchrones, le récepteur (UART1 ou UART2) ne reçoit pas le signal d'horloge de l'émetteur, de sorte que chaque circuit UART dispose de son propre signal d'horloge Hb pour analyser le signal reçu et en déduire la valeur logique des bits véhiculés par ce signal. Le signal d'horloge du récepteur doit ainsi présenter relativement à celui de l'émetteur .une déviation n'excédant pas une certaine valeur, pour que les données puissent être correctement reçues.

Afin d'augmenter les possibilités de transfert de données asynchrones entre dispositifs ayant des générateurs d'horloge susceptibles de présenter de fortes dérives avec le temps et la température, on a développé des protocoles de transmission de données permettant au récepteur de caler son signal d'horloge sur celui de l'émetteur, grâce à l'envoi d'un caractère de synchronisation SYNC. Un tel caractère SYNC, par exemple [55]h en notation hexadécimale, soit le caractère "10101010" en notation binaire (bits B0 à B7), offre au récepteur plusieurs fronts descendants lui permettant d'accorder son signal d'horloge sur le signal d'horloge de référence véhiculé par le caractère SYNC.

Des changements de la vitesse de transfert des données peuvent ainsi être prévus et un recalage en fréquence d'un circuit UART peut intervenir à tout instant. Toutefois, le choix de la fréquence du signal d'horloge local ne peut se faire qu'entre deux valeurs discrètes séparées par un pas en fréquence qui est parfois trop important pour offrir une synchronisation satisfaisante.

Ce problème sera mieux compris en se référant à la figure 3, qui représente l'architecture classique d'un étage de réception de données de circuit UART et d'un générateur d'horloge CKGEN1 qui pilote l'étage de réception de données.

Le circuit CKGEN1 comprend un diviseur programmable DIV1 recevant sur une première entrée un signal d'horloge primaire Ho de fréquence Fo et de période To délivré par un oscillateur OSC, et sur une deuxième entrée une consigne M1. La consigne M1 est un nombre entier généralement codé sur 8 bits, soit un nombre entier compris entre 1 et 255 (la valeur 0 étant inutilisable). Le diviseur DIV1 délivre un signal d'horloge de suréchantillonnage Hs de fréquence $Fs=Fo/M1$ et de période $Ts=M1*To$. Le générateur d'horloge CKGEN1 comprend également un diviseur par N DIV2 recevant en entrée le signal Hs et délivrant un signal d'horloge bit Hb de fréquence $Fb=Hs/N$, soit $Fb=Ho/M1*N$, et de période $Tb=N*Ts$, soit $Tb=N*M1*To$. La fréquence du signal d'horloge bit Hb détermine la vitesse de transfert des données ("baud rate").

Le signal reçu sur la borne Rx du circuit UART est appliqué à un registre à décalage OSREG ("Oversampling Shift Register") piloté par le signal d'horloge Hs. Le registre OSREG présente une sortie parallèle qui est appliquée à l'entrée d'un circuit MBVC et à l'entrée d'un circuit STBDET. Le circuit STBDET est un circuit de détection du bit de démarrage STB. Le circuit MBVC est un circuit de calcul de majorité qui détermine comme étant la valeur d'un bit reçu la valeur majoritaire de K échantillons reçus au cours d'un cycle de N impulsions du signal d'horloge de suréchantillonnage Hs (soit une période du signal Hb) . Généralement, N est égal à 16 et K=3, de sorte que 3 échantillons parmi 16 sont analysés à chaque période d'horloge Hb. Il s'agit des trois échantillons milieux de la série des N échantillons reçus, soit les 7ème, 8ème et 9ème échantillons quand N=16.

Les bits B0, B1,...B7 de chaque caractère reçu sont ainsi délivrés un à un par le circuit MBVC et appliqués à un registre à décalage DTREG ("Data Register") piloté par le signal d'horloge bit Hb. Ces opérations sont effectuées sous le contrôle d'un séquenceur SEQ, généralement une machine d'état à logique câblée, qui contrôle notamment le déchargement des registres OSREG et DTREG et reçoit un signal DET de détection du bit de démarrage délivré par le circuit STBDET.

La figure 4 illustre une séquence de suréchantillonnage d'un bit Bn de rang n, dans le cas où M1=25 et N=16. On obtient 16 échantillons S0 à S15 dont la durée est égale à la période Ts des impulsions du signal d'horloge Hs, Ts étant ici égale à 25*To. La valeur du bit Bn délivrée par le circuit MBVC correspond à la valeur majoritaire des échantillons S6, S7 et S8 (7ème, 8ème et 9ème échantillons).

En résumé, la consigne M1 fournie au générateur CKGEN1 détermine la fréquence du signal d'horloge de suréchantillonnage Fs et la fréquence du signal d'horloge bit Hs. La consigne M1 est délivrée par une unité BDU de détermination de la vitesse de transfert des données ("Baud Rate Control Unit") et est stockée dans un registre BRREG ("Baud Rate Register) dont la sortie est appliquée au générateur CKGEN1. L'unité BDU peut être une unité à logique câblée spécialisée dans l'analyse du caractère SYNC décrit plus haut ou un circuit programmable comme un microprocesseur.

Comme indiqué plus haut, la consigne M1 peut être modifiée à tout instant par l'unité BDU. L'écart $\Delta Fs\%$ entre deux fréquences de suréchantillonnage adjacentes Fs1, Fs2 (soit un incrément de 1 appliqué à la consigne M1) est égal à :

$$(1) \qquad \Delta Fs\% = 100*(Fs2-Fs1)/Fs1$$

$$\Rightarrow (2) \qquad \Delta Fs\% = 100* [(Fo/M1) - (Fo/(M1+1))]/(Fo/(M1+1))$$

$$\Rightarrow (3) \qquad \Delta Fs\% = 100* [(M1+1/M1) - 1]$$

$$\Rightarrow (4) \qquad \Delta Fs\% = 100/M1$$

Lorsque l'analyse du caractère de synchronisation conduit l'unité BDU à trouver une vitesse de transfert de données à mi-chemin entre les deux valeurs possibles Fs1, Fs2, l'erreur de recalage d'horloge ou erreur de synchronisation SYNCERR(Fs) 'est égale à la moitié de l'incrément $\Delta Fs\%$, soit :

$$SYNCERR(Fs) = 100/2M1 \%$$

On peut observer que l'erreur de synchronisation SYNCERR(Fb) sur la fréquence du signal d'horloge bit Hb est identique à l'erreur SYNCERR(Fs) :

$$(5) \qquad \Delta Fb\% = 100* [(Fo/N*M1) - (Fo/N*(M1+1))]/(Fo/N*(M1+1))$$

$$\Rightarrow (6) \qquad \Delta Fb\% = 100* [(Fo/M1) - (Fo/(M1+1))]/(Fo/(M1+1))$$

$$\Rightarrow (7) \qquad \Delta Fb\% = \Delta Fs\%$$

$$\Rightarrow (8) \qquad SYNCERR(Fb) = SYNCERR(Fs)$$

Cette erreur est d'autant plus importante que la consigne M1 est faible. Par exemple, pour M1=25 l'erreur de synchronisation SYNCERR est à peu près de 2% lorsque la fréquence du signal d'horloge de suréchantillonnage Fs est décalée sur la fréquence voisine Fo/(M1+1) ou Fo/(M1-1). Cette erreur est nettement supérieure pour des valeurs de M1 comprises entre 1 et 24. Or, une erreur de 2% représente déjà la limite admise par certains protocoles comme le protocole LIN (Local Interconnect Network).

Une solution à ce problème peut consister à augmenter la fréquence du signal d'horloge primaire Fo. Si par exemple la fréquence Fo est doublée, la valeur limite de la consigne M1 permettant d'atteindre le seuil d'erreur de 2% est divisée par deux (soit M1=12 ou M=13). Toutefois, une telle augmentation de la fréquence primaire n'est pas souhaitée en pratique.

Une autre solution peut consister à utiliser un oscillateur contrôlé en tension (VCO) piloté par une boucle à verrouillage de phase (PLL). Toutefois, les oscillateurs contrôlés en tension sont encombrants et coûteux, et les circuits UART sont des produits devant présenter un prix de revient réduit.

Ainsi, l'objectif de la présente invention est de prévoir un procédé et un dispositif permettant, pour une fréquence déterminée du signal d'horloge primaire, de diminuer l'erreur de synchronisation lors d'un recalage d'horloge.

A cet effet, l'idée de la présente invention est de prévoir un générateur d'horloge capable de recevoir comme consigne de division un nombre décimal, et présentant un pas très fin entre les différentes fréquences d'horloge qu'il peut délivrer.

Ainsi, un autre objectif de l'invention est de prévoir un procédé permettant d'effectuer une division de fréquence à partir d'un nombre décimal.

Ces objectifs sont atteints par la prévision d'un générateur d'horloge programmable pour délivrer à partir d'un signal d'horloge primaire de fréquence et de période déterminées un premier signal d'horloge dont la fréquence est égale à la fréquence du signal d'horloge primaire divisée par une consigne M, dans lequel la consigne M est un nombre décimal comprenant une partie entière M1 et une partie décimale M2, le générateur comprenant des moyens pour moduler la période des impulsions du premier signal d'horloge de manière que la durée de Ni impulsions successives soit sensiblement égale à M*Ni fois la période du signal d'horloge primaire, Ni étant un nombre de référence pour la modulation de la période des impulsions du premier signal d'horloge.

Selon un mode de réalisation, le générateur comprend des moyens pour délivrer un second signal d'horloge dont la fréquence est égale à la fréquence du premier signal d'horloge divisée par un nombre N.

Selon un mode de réalisation, Ni est égal à N.

Selon un mode de réalisation, la partie décimale M2 de la consigne M est un nombre rationnel codé binaire représentant une fraction modulable par incréments égaux à 1/Ni.

Selon un mode de réalisation, la partie décimale M2 est une fraction comprise entre -(Ni-1)/(2*Ni) et +0,5 ou entre -0,5 et +(Ni-1)/(2*Ni) par incréments égaux à 1/Ni.

Selon un mode de réalisation, le générateur ne reçoit en entrée que la partie entière M1 de la consigne et le numérateur de la partie décimale rationnelle M2 de la consigne.

Selon un mode de réalisation, le générateur comprend des moyens de modulation de la période des impulsions du premier signal d'horloge, agencés pour délivrer des impulsions du premier signal d'horloge dont la période est égale à la période du signal d'horloge primaire multipliée par un nombre entier dont la valeur est variable.

Selon un mode de réalisation, les moyens de modulation sont agencés pour délivrer des impulsions du premier signal d'horloge dont la période est modulée sur deux valeurs égales à M1*To et*To, To étant la période du signal d'horloge primaire.

Selon un mode de réalisation, les moyens de modulation sont agencés pour délivrer des impulsions du premier signal d'horloge dont la période est modulée sur deux valeurs égales à M1*To et*To, To étant la période du signal d'horloge primaire.

Selon un mode de réalisation, les moyens de modulation sont agencés pour délivrer des impulsions du premier signal d'horloge dont la période est modulée sur trois valeurs*To, M1*To et*To, To étant la période du signal d'horloge primaire.

Selon un mode de réalisation, les moyens de modulation comprennent un circuit multiplexeur recevant en entrée plusieurs consignes de division dont la valeur varie par incréments entiers autour de la partie entière M1 de la consigne M, délivrant une consigne de valeur variable sélectionnée parmi les plusieurs consignes de division, et un diviseur de la fréquence du signal d'horloge primaire recevant sur une entrée la consigne de valeur variable sélectionnée par le circuit multiplexeur.

Selon un mode de réalisation, les moyens de modulation sont pilotés par un circuit de répartition de modulation agencé pour répartir d'une manière déterminée, sur un groupe de Ni impulsions successives, les impulsions ayant leur période modulée.

Selon un mode de réalisation, le circuit de répartition module en priorité la période des premières et des dernières impulsions parmi un groupe de Ni impulsions successives du premier signal d'horloge, et confère à la période des impulsions centrales du groupe de Ni impulsions une valeur non modulée.

Selon un mode de réalisation, lorsque M2 est supérieur à 0,5 le circuit de répartition module la période des impulsions du premier signal d'horloge par valeurs inférieures en utilisant comme valeur non modulée la valeur To*(M1+1), To étant la période du signal d'horloge primaire.

Selon un mode de réalisation, lorsque M2 est inférieur à 0,5 le circuit de répartition module la période des impulsions du premier signal d'horloge par valeurs supérieures en utilisant comme valeur non modulée la valeur To*(M1), To étant la période du signal d'horloge primaire.

Selon un mode de réalisation, le circuit de répartition comprend un bloc à logique câblée recevant en entrée la partie décimale M1 de la consigne M et délivrant aux moyens de modulation, à chaque nouvelle impulsion du premier signal d'horloge, un signal de sélection du nombre entier déterminant la période de l'impulsion du premier signal d'horloge.

La présente invention concerne également un circuit d'émission réception de données asynchrones comprenant un registre de suréchantillonnage relié à une borne de réception de données, le registre étant piloté par un signal d'horloge de suréchantillonnage, comprenant un générateur d'horloge selon l'invention, le premier signal d'horloge délivré par le générateur d'horloge formant le signal d'horloge de suréchantillonnage.

Selon un mode de réalisation, le circuit d'émission réception de données utilise pour la réception ou l'émission de données un signal d'horloge bit dont la fréquence est égale à la fréquence du premier signal d'horloge divisée par le nombre de référence Ni du circuit générateur d'horloge.

La présente invention concerne également un procédé pour délivrer à partir d'un signal d'horloge primaire de fréquence et de période déterminées, un premier signal d'horloge dont la fréquence est égale à la fréquence du signal d'horloge primaire divisée par une consigne M, dans lequel la consigne M est un nombre décimal comprenant une partie entière M1 et une partie décimale M2, et dans lequel la période des impulsions du premier signal d'horloge est modulée de manière que la durée de Ni impulsions successives soit sensiblement égale à M*Ni fois la période du signal d'horloge primaire, Ni étant un nombre de référence pour la modulation de la période des impulsions du premier signal d'horloge.

Selon un mode de réalisation, le procédé comprend la production d'un second signal d'horloge dont la fréquence est égale à la fréquence du premier signal d'horloge divisée par un nombre N.

Selon un mode de réalisation, Ni est égal à N.

Selon un mode de réalisation, la partie décimale M2 de la consigne M est un nombre rationnel codé binaire représentant une fraction modulable par incréments égaux à 1/Ni.

Selon un mode de réalisation, la partie décimale M2 est une fraction comprise entre -(Ni-1)/(2*Ni) et +0,5 ou entre -0,5 et +(Ni-1)/(2*Ni) par incréments égaux à 1/Ni.

Selon un mode de réalisation, le codage du nombre rationnel M2 ne comprend que le codage du numérateur du nombre rationnel M2, dont le dénominateur est un nombre prédéterminé.

Selon un mode de réalisation, la période des impulsions du premier signal d'horloge est modulée en multipliant la période du signal d'horloge primaire par un nombre entier dont la valeur est variable.

Selon un mode de réalisation, la période des impulsions du premier signal d'horloge est modulée sur deux valeurs égales à M1*To et*To, To étant la période du signal d'horloge primaire.

Selon un mode de réalisation, la période des impulsions du premier signal d'horloge est modulée sur deux valeurs égales à M1*To et*To, To étant la période du signal d'horloge primaire.

Selon un mode de réalisation, la période des impulsions du premier signal d'horloge est modulée sur trois valeurs*To, M1*To et*To, To étant la période du signal d'horloge primaire.

Selon un mode de réalisation, la modulation de la période des impulsions du premier signal d'horloge est mise en oeuvre au moyen d'un circuit multiplexeur recevant en entrée plusieurs consignes de division dont la valeur varie par incréments entiers autour de la partie entière M1 de la consigne M, et délivrant une consigne de valeur variable sélectionnée parmi les plusieurs consignes de division, et au moyen d'un diviseur de la fréquence du signal d'horloge primaire recevant sur une entrée la consigne de valeur variable sélectionnée par le circuit multiplexeur.

Selon un mode de réalisation, la modulation de la période des impulsions du premier signal d'horloge comprend une répartition de modulation consistant à répartir d'une manière déterminée, sur un groupe de Ni impulsions successives, les impulsions ayant leur période modulée.

Selon un mode de réalisation, la répartition de modulation comprend le fait de moduler en priorité la période des premières et des dernières impulsions parmi un groupe de Ni impulsions successives, en conférant à la période des impulsions centrales du groupe une valeur non modulée.

Selon un mode de réalisation, lorsque M2 est supérieur à 0,5 la période des impulsions du premier signal d'horloge est modulée par valeurs inférieures en utilisant comme valeur non modulée la valeur To*(M1+1), To étant la période du signal d'horloge primaire.

Selon un mode de réalisation, lorsque M2 est inférieur à 0,5 la période des impulsions du premier signal d'horloge est modulée par valeurs supérieures en utilisant comme valeur non modulée la valeur To*(M1), To étant la période du signal d'horloge primaire.

La présente invention concerne également un procédé pour le suréchantillonnage, au moyen d'un signal d'horloge de suréchantillonnage, de données reçues sur une borne de réception de données, dans lequel le signal d'horloge de suréchantillonnage est délivré conformément au procédé selon l'invention, à partir d'un signal d'horloge primaire de fréquence et de période déterminées.

Selon un mode de réalisation, le procédé comprend la production d'un signal d'horloge bit dont la fréquence est égale à la fréquence du signal d'horloge de suréchantillonnage divisée par un nombre N.

Selon un mode de réalisation, Ni=N.

Ces objets, caractéristiques et avantages ainsi que d'autres de la présente invention seront exposés plus en détail dans la description suivante du procédé selon l'invention et d'un exemple de réalisation d'un générateur d'horloge selon l'invention, faite à titre non limitatif en relation avec les figures jointes parmi lesquelles :

- la figure 1 précédemment décrite représente une liaison de données entre deux circuits UART,
- la figure 2 précédemment décrite représente le format classique de caractères asynchrones échangés par les circuits UART,
- la figure 3 précédemment décrite représente l'architecture d'un étage de réception de données de circuit UART et d'un générateur d'horloge classique,

- la figure 4 précédemment décrite représente une séquence de suréchantillonnage d'un bit permettant de déduire la valeur de ce bit par calcul de valeur majoritaire d'échantillons,
- la figure 5 représente un étage de réception de données de circuit UART comprenant un générateur d'horloge selon l'invention,
- la figure 6 représente un exemple de réalisation du générateur d'horloge selon l'invention, et
- les figures 7, 8 et 9 illustre des exemples de modulation de la période des impulsions d'un signal d'horloge délivré par le générateur d'horloge selon l'invention.

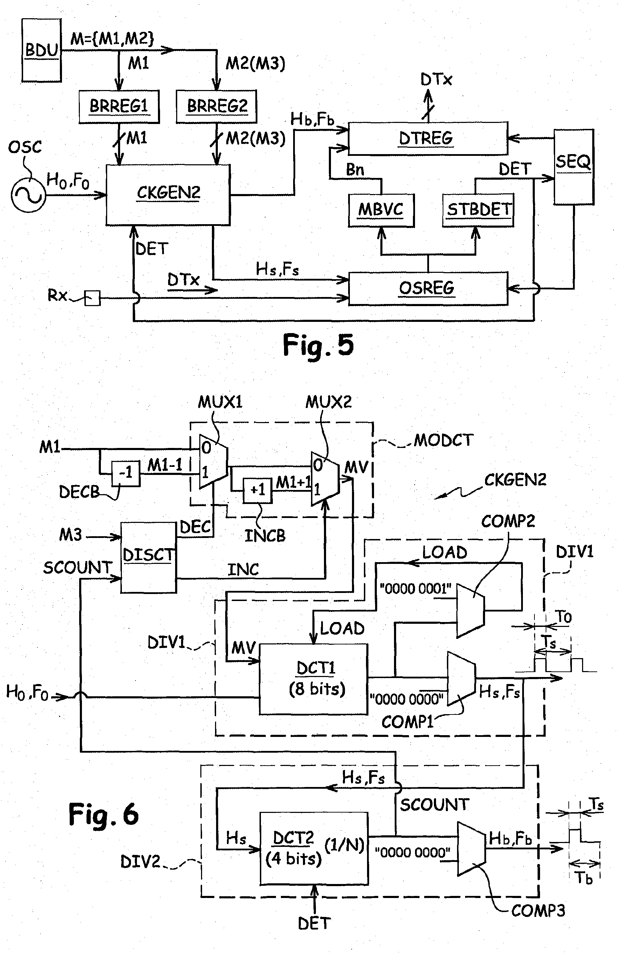

La figure 5 représente un étage de réception de données de circuit UART comprenant un générateur d'horloge CKGEN2 selon l'invention.

De façon classique, le générateur CKGEN2 reçoit un signal d'horloge primaire Ho de fréquence Fo et de période To, et délivre un signal d'horloge de suréchantillonnage Hs de fréquence Fs et de période Ts ainsi qu'un signal d'horloge bit Hb de fréquence Fb et de période Tb.

Ces signaux d'horloge sont appliqués à divers éléments déjà décrits plus haut en relation avec la figure 3, dont les références sont conservées. On distingue ainsi une borne Rx de réception de données reliée à l'entrée d'un registre de suréchantillonnage OSREG. Ce registre est piloté par le signal d'horloge Hs et sa sortie est appliquée à un circuit de calcul de majorité MBVC et à un circuit STBDET de détection du bit de démarrage. La sortie du circuit MBVC est reliée à un registre de réception de données DTREG qui est piloté par le signal d'horloge bit Hb. Un séquenceur SEQ pilote ces divers éléments.

Selon l'invention, le circuit CKGEN2 reçoit sous forme binaire une consigne M comprenant une partie entière M1 supérieure ou égale à 1 et une partie décimale M2 inférieure à 1, par exemple M = 25, 19 avec M1 = 25 et M2 = 0,19. La partie entière M1 de la consigne M est identique à la consigne M1 appliquée à un générateur d'horloge classique tel que le générateur CKGEN1 décrit plus haut. La consigne M détermine la fréquence Fs du signal d'horloge de suréchantillonnage (Fs = Fo/M) et la fréquence Fb du signal d'horloge bit, qui est proportionnelle à la fréquence Fs dans un rapport N (soit Fb = Fs/N = Fo/M*N).

La consigne M est délivrée par une unité BDU ("Baud Rate Control Unit") chargée de la détermination de la vitesse de transfert des données. L'unité BDU est en soi classique mais est ici autorisée à délivrer un nombre décimal M après analyse d'un caractère de synchronisation décrit plus haut. Cette unité BDU n'est d'ailleurs pas nécessairement une unité de synchronisation utilisant le caractère SYNC, et peut être tout type de circuit chargé de contrôler la valeur de la consigne M fournie au générateur CKGEN2.

La consigne M est chargée dans deux registres BRREG1, BRREG2 recevant respectivement la partie M1 et la partie M2, et les sorties de ces registres sont appliquées au générateur CKGEN2.

Selon l'invention, le générateur CKGEN2 module la période des impulsions du signal d'horloge de suréchantillonnage Hs, c'est-à-dire la durée séparant deux impulsions successives du signal d'horloge Hs, de manière que la valeur moyenne Tsav de la période Ts de ces impulsions, sur un nombre déterminé Ni d'impulsions, soit sensiblement égale à To*M. Cette règle peut être formalisée par la relation suivante :

$$(9) \qquad Tsav = (\Sigma_{Ni}\ Ts)/Ni \approx To*M$$

dans laquelle $\Sigma_{Ni}$ Ts est la somme de Ni périodes Ts . Il en résulte qu'en moyenne la période bit Tb est également proportionnelle à la période primaire To :

$$(10) \qquad Tb = Ni*Tsav \approx Ni*M*To$$

Ce nombre déterminé d'impulsions Ni pour le calcul de la valeur moyenne mentionnée à la relation (9) est ici avantageusement choisi égal à N, de sorte qu'il existe une correspondance exacte entre la durée de la période bit Tb et la consigne M. La relation (9) devient alors :

$$(11) \qquad Tsav = (\Sigma_N\ Ts)/N \approx To*M$$

Ainsi :

$$(12) \qquad Fs \approx Fo/M$$

$$(13) \quad Fb = Fs/N \approx Fo/N*M$$

Ainsi, grâce à l'invention, le signal d'horloge de suréchantillonnage Hs et le signal d'horloge bit Hb peuvent être finement ajustés avec un diviseur décimal M comprenant des chiffres après la virgule. Les erreurs de synchronisation sont fortement réduites et ramenées à l'incrément existant entre deux valeurs successives de la partie décimale M2.

Selon un aspect de l'invention, la partie décimale M2 est un nombre rationnel du type :

$$(14) \quad M2=M3/M3max$$

dont seul le numérateur M3 est stocké codé dans le registre BRREG2, sous la forme d'un nombre binaire de X bits. Le numérateur M3 peut ainsi présenter M3max valeurs possibles avec $M3max=2^X$, et est compris entre 0 et une valeur limite $M3max-1 = 2^X-1$. Le nombre rationnel M2 est ainsi modulable entre 0 et (M3max-1)/M3max par pas égaux à 1/M3max.

Etant donné que la modulation de la période Ts des impulsions du signal Hs est effectuée sur un groupe de Ni impulsions, pour obtenir la valeur moyenne Tsav visée par la relation 9 (ou la relation 11), il n'est pas nécessaire que la valeur limite M3max puisse être supérieure à Ni. En effet on dispose en tout et pour tout de Ni (ou N) impulsions à moduler pour satisfaire la relation 9 (ou la relation 11). Ainsi, dans un souci d'économie du nombre de bits de codage, M3max est de préférence égal à Ni (ou N) et les incréments de la partie décimale M2 sont égaux à 1/Ni (ou 1/N).

Selon encore un autre aspect de l'invention, la période Ts des impulsions du signal d'horloge Hs est modulé par valeurs discrètes au voisinage d'une valeur non modulée et le numérateur M3 du nombre rationnel M2 détermine le nombre de périodes modulées. Cette modulation par valeur discrète peut être faite de diverses manières et notamment selon l'une des trois méthodes mentionnées ci-après.

Méthode 1 : moduler la période de M3 impulsions avec une valeur unique de modulation égale à To*(M1+1) et choisir comme valeur non modulée une période de valeur To*M1. Dans ce cas Tsav est égale à :

$$(15) \quad Tsav = 1/Ni[I*(To*M1) + J*(To*(M1+1))]$$

I et J étant des coefficients de modulation qui sont fonction de M3, avec J=M3 et I=M3max-M3, et M3 le numérateur d'une fraction M3/M3max qui est toujours positive.

Méthode 2 : moduler la période de M3 impulsions avec une valeur unique de modulation égale à To*(M1-1) et choisir comme valeur non modulée une période de valeur To*M1. Dans ce cas Tsav est égale à :

$$(16) \quad Tsav = 1/Ni[I*(To*M1) + J*(To*(M1-1))]$$

avec J=M3 et I= M3max-M3, et M3 le numérateur d'une fraction M3/M3max qui est toujours négative.

Méthode 3 (combinaison des méthodes 1 et 2) : moduler la période de M3 impulsions avec deux valeurs de modulation égales à To*(M1+1) et To(M1-1) et choisir comme valeur non modulée une période de valeur To*M1. Dans ce cas Tsav obéit à l'une des deux relations (15) ou (16) ci-dessus :

$$(15) \quad Tsav = 1/Ni[I*(To*M1) + J*(To*(M1+1))]$$

ou :

$$(16) \quad Tsav = 1/Ni[I*(To*M1) + J*(To*(M1-1))]$$

avec J=M3 et I= M3max-M3.

Dans ce cas M3 est le numérateur d'une fraction M3/M3max comprise entre -M3max/(2*M3max) et (M3max-1)/(2*M3max) soit entre -0,5 et (M3max-1)/(2*M3max)), ou comprise entre -(M3max-1)/(2*M3max) et M3max/(2*M3max) soit entre -(M3max-1)/(2*M3max) et +0,5.

L'avantage de la méthode 3 est que le nombre maximal d'échantillons à moduler dans chaque groupe de Ni impulsions n'est jamais supérieur à M3max/2.

La figure 6 représente un exemple de réalisation du générateur CKGEN2 mettant en oeuvre la méthode 3. On suppose dans cet exemple que M1 peut être choisi entre 1 et 255, soit un codage de M1 sur 8 bits (registre BRREG1). On suppose également que Ni=N=16 et on choisit M3max=N, soit un codage de M3 sur 4 bits (registre BRREG2).

Le générateur d'horloge comprend un diviseur programmable DIV1 en 1/M1 délivrant le signal d'horloge Hs, et un diviseur en 1/N DIV2 délivrant le signal d'horloge bit Hb. Le diviseur programmable DIV1 reçoit en entrée une consigne de division variable MV délivrée par un circuit de modulation MODCT. Le circuit MODCT reçoit en entrée la partie entière M1 de la consigne M et est piloté par un circuit DISCT.

Le diviseur DIV1 comprend un décompteur DCT1 programmable ("down-counter"), ici de 8 bits, piloté par le signal d'horloge primaire Ho. Le décompteur DCT1 présente une entrée recevant la consigne variable MV délivrée par le circuit de modulation MODCT. Sa sortie est appliquée sur une entrée d'un comparateur COMP1 recevant sur son autre entrée la valeur [00]h. La sortie du comparateur COMP1 délivre le signal Hs sous forme d'impulsions de durée To et de période variable Tb=MV*To.

La sortie du décompteur DCT1 est également appliquée sur une entrée d'un comparateur COMP2 recevant sur son autre entrée la valeur [01]h. La sortie du comparateur COMP2 délivre un signal LOAD de chargement d'une nouvelle consigne variable MV après chaque cycle de décomptage ayant conduit à la délivrance d'une impulsion du signal d'horloge Hs.

Le diviseur DIV2 comprend un décompteur DCT2 par N, ici de 4 bits, dont l'entrée reçoit le signal Hs. La sortie de ce décompteur est appliquée sur une entrée d'un comparateur COMP3 recevant sur son autre entrée la valeur [00]h. La sortie du comparateur COMP3 délivre le signal Hb sous forme d'impulsions de durée Ts et de période Tb=N*Ts.

Le circuit de modulation MODCT comprend un multiplexeur MUX1 recevant sur une première entrée la partie entière M1 de la consigne M et sur une deuxième entrée la partie entière M1 décrémentée d'une unité, soit M1-1. La valeur M1-1 est délivrée par un bloc de décrémentation DECB recevant en entrée la partie entière M1. La sortie du multiplexeur MUX1 est appliquée sur une entrée d'un multiplexeur MUX2 dont l'autre entrée reçoit la partie entière M1 incrémentée d'une unité, soit M1+1. La valeur M1+1 est délivrée par un bloc d'incrémentation INCB recevant en entrée la sortie du multiplexeur MUX1 (ou la partie entière M1).

La consigne variable MV peut ainsi être égale à M1-1, M1 et M1+1. Il en résulte que selon la valeur de la consigne MV appliquée au diviseur DIV1 au terme de chaque cycle de décomptage, la période de l'impulsion suivante du signal Hs peut être égale à T0*(M1-1), T0*M1 ou T0*(M1+1).

Les multiplexeurs MUX1, MUX2 sont pilotés respectivement par des signaux DEC, INC délivrés par le circuit DISCT. Lorsque DEC=1 et INC=0, le circuit MODCT délivre une consigne MV égale à M1-1. Lorsque DEC=0 et INC=1, le circuit MODCT délivre une consigne MV égale à M1+1. Lorsque DEC=0 et INC=0, le circuit MODCT délivre une consigne MV égale à M1 (le cas où DEC=1 et INC=1 n'est pas utilisé ici et est équivalent au cas où DEC et INC sont égaux à 0).

Le circuit DISCT est un circuit de répartition de modulation qui reçoit en entrée le numérateur M3 de la partie décimale M2, laquelle est ici un nombre rationnel M3/M3max (M3max étant ici prédéterminé, seul le numérateur M3 est stocké dans le registre BRREG2). Le circuit DISCT répartit les périodes de modulation conformément à la méthode 3 décrite plus haut. Comme à chaque groupe de N impulsions le nombre de période Ts à moduler n'est jamais supérieur à M3max/2 soit 8 périodes à moduler au maximum, le circuit DISCT module préférentiellement la période des premières et des dernières impulsions sans moduler la période des impulsions centrales du groupe (qui définissent les échantillons pris en compte pour le calcul de valeur majoritaire). Le nombre rationnel M2 est ainsi une fraction comprise entre -N/(2(N-1)) et +0,5 ou entre -0, 5 et +N/(2(N-1)) par pas égaux à 1/N. On choisit ici la convention de codage suivante :

Convention de codage de la partie décimale M2 :

M3 = 0001 $\Rightarrow$ M2 = +1/16 = 0,06
M3 = 0010 $\Rightarrow$ M2 = +2/16 = 0,13
M3 = 0011 $\Rightarrow$ M2 = +3/16 = 0,19
M3 = 0100 => M2 = +4/16 = 0,25
M3 = 0101 $\Rightarrow$ M2 = +5/16 = 0,31
M3 = 0110 $\Rightarrow$ M2 = +6/16 = 0,38
M3 = 0111 $\Rightarrow$ M2 = +7/16 = 0,44
M3 = 1000 $\Rightarrow$ M2 = -8/16 = - 0,5
M3 = 1001 $\Rightarrow$ M2 = -7/16 = - 0,44

M3 = 1010 $\Rightarrow$ M2 = -6/16 = - 0,38
M3 = 1011 $\Rightarrow$ M2 = -5/16 = - 0,31
M3 = 1100 $\Rightarrow$ M2 = -4/16 = - 0,25
M3 = 1101 $\Rightarrow$ M2 = -3/16 = - 0,19
M3 = 1110 $\Rightarrow$ M2 = -2/16 = - 0,13
M3 = 1111 $\Rightarrow$ M2 = -1/16 = - 0,06

Afin d'effectuer la répartition proposée plus haut, le circuit DISCT reçoit un signal SCOUNT qui lui indique le rang de chaque impulsion du signal d'horloge Hs au sein de chaque groupe de N impulsions. Le signal SCOUNT est compris ici entre 0 et 15 et est ici prélevé à la sortie du décompteur DCT2, soit à l'entrée dù comparateur COMP3. Pour la bonne synchronisation du signal SCOUNT avec les caractères de 8 bits de données reçus par le circuit UART, le décompteur DCT2 est remis à zéro à chaque fois qu'un bit de démarrage STB est reçu par l'UART. A cet effet, le décompteur DCT2 reçoit un signal DET délivré par le circuit STBDET (fig. 4), qui passe à 1 lorsque le bit STB est détecté.

Le circuit DISCT est réalisé ici au moyen d'un compilateur VHDL. Sa structure étant trop complexe pour être illustrée par un schéma logique, on décrira ci-après un exemple d'algorithme VHDL permettant de réaliser ce circuit.

Algorithme VHDL pour la compilation du circuit DISCT:

DEC = '1'
-- case "-8/16"
when M3 = "1000"
and SCOUNT = 13 or 12 or 11 or 10 or 3 or 2 or 1 or 0
or
-- case "-7/16"
when M3 = "1001"
and SCOUNT = 13 or 12 or 11 or 3 or 2 or 1 or 0
or
-- case "-6/16"
when M3 = "1010"
and SCOUNT = 13 or 12 or 11 or 2 or 1 or 0 or
-- case "-5/16"
when M3 = "1011"
and SCOUNT = 13 or 12 or 2 or 1 or 0
or
-- case "-4/16"
when M3 = "1100"
and SCOUNT = 13 or 12 or 1 or 0
or
-- case "-3/16"
when M3 = "1101"
and SCOUNT = 13 or 1 or 0
or
-- case "-2/16"
when M3 = "1110"
and SCOUNT = 13 or 0
or
-- case "-1/16"
when M3 = "1111"
and SCOUNT = 0
else '0'
***
INC = '1'
-- case "+1/16"
when M3 = "0001"
and SCOUNT = 13
or
-- case "+2/16"
when M3 = "0010"

```
and SCOUNT = 13 or 0
or
-- case "+3/16"
when M3 = "0011"
and SCOUNT = 13 or 12 or 0
or
-- case "+4/16"
when M3 = "0100"
and SCOUNT = 13 or 12 or 1 or 0
or
-- case "+5/16"
when M3 = "0101"
and SCOUNT = 13 or 12 or 11 or 1 or 0
-- case "+6/16"
when M3 = "0110"
and SCOUNT = 13 or 12 or 11 or 2 or 1 or 0
-- case "+7/16"
when M3 = 0111"
and SCOUNT = 13 or 12 or 11 or 10 or 2 or 1 or 0
else '0'
```

Considérons à titre d'illustration la séquence suivante :

```
DEC = '1'
-- case "-8/16"
when M3 = "1000"
and SCOUNT = 13 or 12 or 11 or 10 or 3 or 2 or 1 or 0"
```

Cette séquence signifie qu'un ajustement de -8/16 est appliqué à la période bit Tb lorsque le numérateur M3 est égal à "1000" (voir convention de codage plus haut) et que le signal DEC appliqué au circuit MODCT par le circuit DISCT est porté à 1 (MV=M1-1) pendant la détermination de la période des impulsions du signal Hs de rang 0, 1, 2, 3, 10, 11, 12 ou 13 (la valeur par défaut de DEC et INC étant 0).

L'algorithme VHDL exécuté par le circuit DISCT peut aussi être décrit en termes logiques simples :

```
Valeur par défaut de DEC et INC : 0
Si M2=+1/16 ⇒ INC=1 quand SCOUNT=13
Si M2=+2/16 ⇒ INC=1 quand SCOUNT=13,0
Si M2=+3/16 ⇒ INC=1 quand SCOUNT=13,12,0
Si M2=+4/16 ⇒ INC=1 quand SCOUNT=13,12,1,0
Si M2=+5/16 ⇒ INC=1 quand SCOUNT=13,12,11,1,0
Si M2=+6/16 ⇒ INC=1 quand SCOUNT=13,12,11,2,1,0
Si M2=+7/16 ⇒ INC=1 quand SCOUNT=13,12,11,10,2,1,0
Si M2=-8/16 ⇒ DEC=1 quand SCOUNT =13,12,11,10,3,2,1,0
Si M2=-7/16 ⇒ DEC=1 quand SCOUNT=13,12,11,3,2,1,0
Si M2=-6/16 ⇒ DEC=1 quand SCOUNT=13,12,11,2,1,0
Si M2=-5/16 ⇒ DEC=1 quand SCOUNT=13,12,2,1,0
Si M2=-4/16 ⇒ DEC=1 quand SCOUNT=13,12,1,0
Si M2=-3/16 ⇒ DEC=1 quand SCOUNT=13,1,0
Si M2=-2/16 ⇒ DEC=1 quand SCOUNT=13,0
M2=-1/16 ⇒ DEC=1 quand SCOUNT=0
```

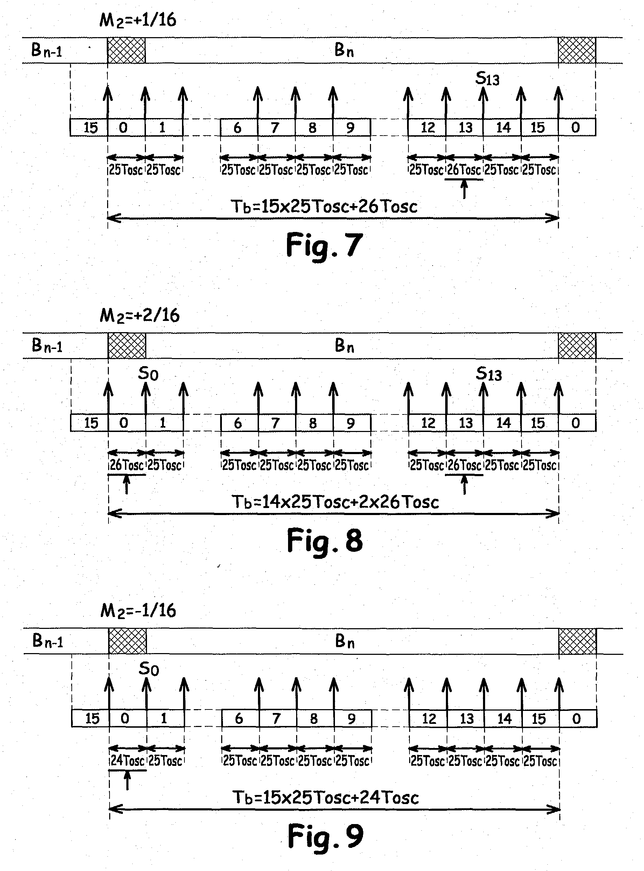

Les figures 7, 8 et 9 illustrent trois exemples de modulation de la période des impulsions du signal d'horloge de suréchantillonnage Hs, choisis parmi les cas prévus ci-dessus. On considère dans ces exemples que la partie entière M1 de la consigne M est égale à 25, soit le cas limite conduisant à une erreur de synchronisation de 2% dans l'art antérieur. La durée de la période de chaque impulsion est mentionnée sur ces figures, "Tosc" étant la période du signal d'horloge primaire (désignée "To" dans ce qui précède).

Exemple A, figure 7

Cet exemple correspond au cas où M2 = +1/16 (soit 0,06). On voit que la période de la quatorzième impulsion S13 est égale à 26*To alors que les quinze autres impulsions présentent une période égale à 25*To. Dans ce cas :

M = M1 + M2 = 25,06
Tb = 15*25To + 26*To
Tb = T0(15*25 + 26) To
Tb = 401 To
Fb = Fo/401
Tsav = 401/16 To
Tsav = 25,0625 To
Fsav = Fo/25,0625

Exemple B, figure 8

Cet exemple correspond au cas où M2 = +2/16 (soit 0,12). On voit que la période de la première impulsion S0 et de la quatorzième impulsion S13 est égale à 26*To (soit (M1+1)*To) alors que les quatorze autres impulsions présentent une période égale à 25*To. Dans ce cas :

M = M1 + M2 = 25,12
Tb = 14*25To + 2*26*To
Tb = T0(14*25 + 2*26) To
Tb = 401 To
Fb = Fo/402
Tsav = 402/16 To
Tsav = 25,125 To
Fsav = Fo/25,125

Exemple C, figure 9

Cet exemple correspond au cas où M2 = -1/16 (soit -0,06). La période de la première impulsion S0 est égale à 24*To (soit (M1-1)*To) alors que les quinze autres impulsions présentent une période égale à 25*To. Dans ce cas :

M = M1 + M2 = 24,94
Tb = 15*25To + 24*To
Tb = T0(15*25 + 24) To
Tb = 399 To
Fb = Fo/399
Tsav = 399/16 To
Tsav = 24,9375
Fsav = Fo/24,9375

Dans les exemples ci-dessus, Fsav est la fréquence moyenne du signal Hs sur une durée de 16 périodes.

Il apparaîtra clairement à l'homme de l'art que la présente invention est susceptible de divers modes de réalisation et applications.

En particulier la modulation de la période Ts des impulsions du signal d'horloge de suréchantillonnage Hs peut être faite, comme décrit plus haut, exclusivement par valeurs positives (Ts= (M1+1)*To) ou exclusivement par valeurs négatives (Ts= (M1-1)*To).

La présente invention est par ailleurs susceptible de diverses applications dans d'autres domaines que celui des transmissions de données asynchrones, et est applicable de façon générale à tout type de circuit nécessitant un réglage fin d'un signal d'horloge, se trouvant au-delà de la capacité de résolution offerte par une division de fréquence par un nombre entier.

Dans de telles applications, le nombre Ni de périodes pour la détermination de la valeur moyenne de la période Ts peut être une consigne variable choisie par l'utilisateur. Le nombre Ni peut également être choisit automatiquement par un circuit chargé de trouver la meilleure approximation, sous forme de nombre rationnel M3/Ni, et sans dépasser une limite Nimax, d'une consigne comprenant une partie M2 purement décimale et non nécessairement rationnelle fournie au générateur d'horloge selon l'invention.

**Revendications**

1. Générateur d'horloge programmable (CKGEN2) pour délivrer à partir d'un signal d'horloge primaire (Hs) de fréquence (Fo) et de période (To) déterminées un premier signal d'horloge (Hs) dont la fréquence (Fs) est égale à la fréquence (Fo) du signal d'horloge primaire divisée par une consigne M,

**caractérisé en ce que** la consigne M est un nombre décimal comprenant une partie entière M1 et une partie décimale M2, et **en ce qu'**il comprend des moyens (MODCT, DISCT, DIV1) pour moduler la période des impulsions du premier signal d'horloge de manière que la durée de Ni impulsions successives soit sensiblement égale à M*Ni fois la période (To) du signal d'horloge primaire (Ho), Ni étant un nombre de référence pour la modulation de la période des impulsions du premier signal d'horloge.

**2.** Générateur d'horloge selon la revendication 1, comprenant des moyens (DIV2) pour délivrer un second signal d'horloge (Hb) dont la fréquence (Fb) et est égale à la fréquence (Fs) du premier signal d'horloge (Hs) divisée par un nombre N.

**3.** Générateur d'horloge selon la revendication 2, dans lequel Ni est égal à N.

**4.** Générateur d'horloge selon l'une des revendications 1 à 3, dans lequel la partie décimale M2 de la consigne M est un nombre rationnel codé binaire représentant une fraction modulable par incréments égaux à 1/Ni.

**5.** Générateur d'horloge selon la revendication 4, dans lequel la partie décimale M2 est une fraction comprise entre -(Ni-1)/(2*Ni) et +0,5 ou entre -0,5 et +(Ni-1)/(2*Ni) par incréments égaux à 1/Ni.

**6.** Générateur d'horloge selon l'une des revendications 4 et 5, ne recevant en entrée que la partie entière M1 de la consigne et le numérateur (M3) de la partie décimale rationnelle M2 de la consigne.

**7.** Générateur d'horloge selon l'une des revendications 1 à 6, comprenant des moyens (MODCT) de modulation de la période des impulsions du premier signal d'horloge, agencés pour délivrer des impulsions du premier signal d'horloge dont la. période (Ts) est égale à la période du signal d'horloge primaire (To) multipliée par un nombre entier (MV) dont la valeur est variable.

**8.** Générateur d'horloge selon la revendication 7, dans lequel les moyens de modulation sont agencés pour délivrer des impulsions du premier signal d'horloge dont la période est modulée sur deux valeurs égales à M1*To et (M1+1)*To, To étant la période du signal d'horloge primaire (Ho).

**9.** Générateur d'horloge selon la revendication 7, dans lequel les moyens de modulation sont agencés pour délivrer des impulsions du premier signal d'horloge dont la période est modulée sur deux valeurs égales à M1*To et (M1-1)*To, To étant la période du signal d'horloge primaire (Ho).

**10.** Générateur d'horloge selon la revendication 7, dans lequel les moyens de modulation sont agencés pour délivrer des impulsions du premier signal d'horloge dont la période est modulée sur trois valeurs (M1-1)*To, M1*To et (M1+1)*To, To étant la période du signal d'horloge primaire (Ho).

**11.** Générateur d'horloge selon l'une des revendications 7 à 10, dans lequel les moyens de modulation (MODCT) comprennent :

- un circuit multiplexeur (MUX1, MUX2) recevant en entrée plusieurs consignes de division (M1, M1-1, M1+1) dont la valeur varie par incréments entiers autour de la partie entière M1 de la consigne M, délivrant une consigne (MV) de valeur variable sélectionnée parmi les plusieurs consignes de division, et
- un diviseur (DIV1) de la fréquence du signal d'horloge primaire (Ho) recevant sur une entrée la consigne de valeur variable (MV) sélectionnée par le circuit multiplexeur.

**12.** Générateur d'horloge selon l'une des revendications 7 à 11, dans lequel les moyens de modulation sont pilotés par un circuit de répartition de modulation (DISCT) agencé pour répartir d'une manière déterminée, sur un groupe de Ni impulsions successives, les impulsions ayant leur période modulée.

**13.** Générateur d'horloge selon la revendication 12, dans lequel le circuit de répartition (DISCT) module en priorité la période des premières et des dernières impulsions parmi un groupe de Ni impulsions successives du premier signal d'horloge, et confère à la période des impulsions centrales du groupe de Ni impulsions une valeur non modulée.

**14.** Générateur d'horloge selon l'une des revendications 12 et 13 dans lequel lorsque M2 est supérieur à 0, 5 le circuit de répartition module la période des impulsions du premier signal d'horloge par valeurs inférieures en utilisant comme valeur non modulée la valeur To*(M1+1), To étant la période du signal d'horloge primaire.

**15.** Générateur d'horloge selon l'une des revendications 12 et 13, dans lequel lorsque M2 est inférieur à 0,5 le circuit de répartition module la période des impulsions du premier signal d'horloge par valeurs supérieures en utilisant comme valeur non modulée la valeur To*(M1), To étant la période du signal d'horloge primaire.

**16.** Générateur d'horloge selon l'une des revendications 12 à 15, dans lequel le circuit de répartition (DISCT) comprend un bloc à logique câblée recevant en entrée la partie décimale M1 de la consigne M et délivrant aux moyens de modulation, à chaque nouvelle impulsion du premier signal d'horloge, un signal de sélection (DEC, INC) du nombre entier déterminant la période de l'impulsion du premier signal d'horloge.

**17.** Circuit d'émission réception de données asynchrones (UART) comprenant un registre de suréchantillonnage (OSREG) relié à une borne de réception de données (Rx), le registre étant piloté par un signal d'horloge de suréchantillonnage (Hs), **caractérisé en ce qu'**il comprend un générateur d'horloge (CKGEN2) selon l'une des revendications 1 à 16 et **en ce que** le premier signal d'horloge (Hs) délivré par le générateur d'horloge forme le signal d'horloge de suréchantillonnage.

**18.** Circuit d'émission réception de données selon la revendication 17, utilisant pour la réception ou l'émission de données un signal d'horloge bit (Hb). dont la fréquence (Fb) est égale à la fréquence (Fs) du premier signal d'horloge (Hs) divisée par le nombre de référence Ni (N) du'circuit générateur d'horloge.

**19.** Procédé pour délivrer à partir d'un signal d'horloge primaire de fréquence (Fo) et de période (To) déterminées, un premier signal d'horloge dont la fréquence (Fs) est égale à la fréquence (Fo) du signal d'horloge primaire divisée par une consigne M, **caractérisé en ce que** la consigne M est un nombre décimal comprenant une partie entière M1 et une partie décimale M2, et **en ce que** la période des impulsions du premier signal d'horloge est modulée de manière que la durée de Ni impulsions successives soit sensiblement égale à M*Ni fois la période (To) du signal d'horloge primaire, Ni étant un nombre de référence pour la modulation de la période des impulsions du premier signal d'horloge.

**20.** Procédé selon la revendication 19, comprenant la production d'un second signal d'horloge (Hb) dont la fréquence (Fb) est égale à la fréquence (Fs) du premier signal d'horloge (Hs) divisée par un nombre N.

**21.** Procédé selon la revendication 20, dans lequel Ni est égal à N.

**22.** Procédé selon l'une des revendications 19 à 21, dans lequel la partie décimale M2 de la consigne M est un nombre rationnel codé binaire représentant une fraction modulable par incréments égaux à 1/Ni.

**23.** Procédé selon la revendication 22, dans lequel la partie décimale M2 est une fraction comprise entre - (Ni-1)/(2*Ni) et +0,5 ou entre -0,5 -et +(Ni-1)/(2*Ni) par incréments égaux à 1/Ni.

**24.** Procédé selon l'une des revendications 22 et 23, dans lequel le codage du nombre rationnel M2 ne comprend que le codage du numérateur (M3) du nombre rationnel M2, dont le dénominateur (Ni, N, M3max) est un nombre prédéterminé.

**25.** Procédé selon l'une des revendications 19 à 24, dans lequel la période des impulsions du premier signal d'horloge est modulée en multipliant la période du signal d'horloge primaire par un nombre entier dont la valeur est variable.

**26.** Procédé selon la revendication 25, dans lequel la période des impulsions du premier signal d'horloge est modulée sur deux valeurs égales à M1*To et (M1+1)*To, To étant la période du signal d'horloge primaire (Ho).

**27.** Procédé selon la revendication 25, dans lequel la période des impulsions du premier signal d'horloge est modulée sur deux valeurs égales à M1*To et (M1-1)*To, To étant la période du signal d'horloge primaire (Ho).

**28.** Procédé selon la revendication 25, dans lequel la période des impulsions du premier signal d'horloge est modulée sur trois valeurs (M1-1)*To, M1*To et (M1+1)*To, To étant la période du signal d'horloge primaire (Ho).

**29.** Procédé selon l'une des revendications 25 à 28, dans lequel la modulation de la période des impulsions du premier signal d'horloge est mise en oeuvre au moyen d'un circuit multiplexeur (MUX1, MUX2) recevant en entrée plusieurs consignes de division (M1-1, M1, M1+1) dont la valeur varie par incréments entiers autour de la partie entière M1 de la consigne M, et délivrant une consigne (MV) de valeur variable sélectionnée parmi les plusieurs consignes de division, et au moyen d'un diviseur (DIV1) de la fréquence du signal d'horloge primaire recevant sur une entrée la consigne de valeur variable (MV) sélectionnée par le circuit multiplexeur.

**30.** Procédé selon l'une des revendications 25 à 29, dans lequel la modulation de la période des impulsions du premier signal d'horloge comprend une répartition de modulation consistant à répartir d'une manière déterminée, sur un groupe de Ni impulsions successives, les impulsions ayant leur période modulée.

**31.** Procédé selon la revendication 30, dans lequel la répartition de modulation comprend le fait de moduler en priorité la période des premières et des dernières impulsions parmi un groupe de Ni impulsions successives, en conférant à la période des impulsions centrales du groupe une valeur non modulée.

**32.** Procédé selon l'une des revendications 30 et 31 dans lequel lorsque M2 est supérieur à 0,5 la période des impulsions du premier signal d'horloge est modulée par valeurs inférieures en utilisant comme valeur non modulée la valeur To*(M1+1), To étant la période du signal d'horloge primaire (Ho).

**33.** Procédé selon l'une des revendications 30 et 31, dans lequel lorsque M2 est inférieur à 0,5 la période des impulsions du premier signal d'horloge est modulée par valeurs supérieures en utilisant comme valeur non modulée la valeur To*(M1), To étant la période du signal d'horloge primaire (Ho).

**34.** Procédé pour le suréchantillonnage, au moyen d'un signal d'horloge de suréchantillonnage (Hs), de données reçues sur une borne de réception de données, **caractérisé en ce que** le signal d'horloge de suréchantillonnage est délivré conformément au procédé selon l'une des revendications 19 à 33 à partir d'un signal d'horloge primaire de fréquence (Fo) et de période (To) déterminées.

**35.** Procédé selon la revendication 34, comprenant la production d'un signal d'horloge bit (Hb) dont la fréquence (Fb) est égale à la fréquence (Fs) du signal d'horloge de suréchantillonnage (Hs) divisée par un nombre N.

**36.** Procédé selon la revendication 35, dans lequel Ni=N.

## Fig. 1

H1 → UART1 | Rx □ ← □ Tx | UART2 ← H2
Tx □ → □ Rx

**Fig. 1**

## Fig. 2

CHAR 1 — CHAR 2

$B_0$ $B_1$ $B_2$ $B_3$ $B_4$ $B_5$ $B_6$ $B_7$

STB — SPB

**Fig. 2**

## Fig. 3

BDU → $M1$

UART1, UART2

BRREG → $M1$

CKGEN1

$DTx\{B_0, B_1 \dots B_7\}$

OSC $H_0, F_0$ → 1/M1 $H_s, F_s$ → 1/N → $H_b, F_b$ → DTREG → SEQ

DIV1 · DIV2

MBVC · STBDET — DET

Rx □ $DTx$ → OSREG

**Fig. 3**

## Fig. 4

$B_{n-1}$ | $B_n$

$S_0$ $S_1$ $S_6$ $S_7$ $S_8$ $S_{12}$ $S_{13}$ $S_{14}$ $S_{15}$

15 | 0 | 1 | 6 | 7 | 8 | 9 | 12 | 13 | 14 | 15 | 0

25Tosc 25Tosc | 25Tosc 25Tosc 25Tosc 25Tosc | 25Tosc 25Tosc 25Tosc 25Tosc

$Ts$

$Tb = 16 \times 25Tosc$

**Fig. 4**

Fig. 5

Fig. 6

$M_2 = +1/16$

$B_{n-1}$  $B_n$  $S_{13}$

| 15 | 0 | 1 | | 6 | 7 | 8 | 9 | | 12 | 13 | 14 | 15 | 0 |

25Tosc 25Tosc  25Tosc 25Tosc 25Tosc 25Tosc  25Tosc 26Tosc 25Tosc 25Tosc

$T_b = 15 \times 25 Tosc + 26 Tosc$

**Fig. 7**

$M_2 = +2/16$

$B_{n-1}$  $B_n$

$S_0$  $S_{13}$

| 15 | 0 | 1 | | 6 | 7 | 8 | 9 | | 12 | 13 | 14 | 15 | 0 |

26Tosc 25Tosc  25Tosc 25Tosc 25Tosc 25Tosc  25Tosc 26Tosc 25Tosc 25Tosc

$T_b = 14 \times 25 Tosc + 2 \times 26 Tosc$

**Fig. 8**

$M_2 = -1/16$

$B_{n-1}$  $B_n$

$S_0$

| 15 | 0 | 1 | | 6 | 7 | 8 | 9 | | 12 | 13 | 14 | 15 | 0 |

24Tosc 25Tosc  25Tosc 25Tosc 25Tosc 25Tosc  25Tosc 25Tosc 25Tosc 25Tosc

$T_b = 15 \times 25 Tosc + 24 Tosc$

**Fig. 9**

**Office européen des brevets**

# RAPPORT DE RECHERCHE EUROPEENNE

Numéro de la demande

EP 03 35 8014

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 316 982 B1 (GUTIERREZ )<br>13 novembre 2001 (2001-11-13)<br>* colonne 1, ligne 35 - colonne 2, ligne 37 *<br>* colonne 4, ligne 66 - colonne 7, ligne 13; figures 1,3 *<br>--- | 1,4,19 | G06F1/08 |
| A | US 5 436 628 A (LIEPOLD)<br>25 juillet 1995 (1995-07-25)<br>* colonne 2, ligne 15 - colonne 5, ligne 31; figure 1 *<br>--- | 1,7,19 | |
| A | US 3 976 945 A (COX)<br>24 août 1976 (1976-08-24)<br>* colonne 1, ligne 45 - colonne 2, ligne 25 *<br>* colonne 2, ligne 40 - colonne 5, ligne 7; figure 1 *<br>--- | 1,19 | |
| A | PATENT ABSTRACTS OF JAPAN<br>vol. 016, no. 586 (P-1463),<br>25 décembre 1992 (1992-12-25)<br>& JP 04 235616 A (MURATA MACH LTD),<br>24 août 1992 (1992-08-24)<br>* abrégé *<br>----- | 1,19 | **DOMAINES TECHNIQUES RECHERCHES (Int.Cl.7)**<br><br>G06F |

Le présent rapport a été établi pour toutes les revendications

| Lieu de la recherche | Date d'achèvement de la recherche | Examinateur |
|---|---|---|
| BERLIN | 22 décembre 2003 | Taylor, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

## ANNEXE AU RAPPORT DE RECHERCHE EUROPEENNE
## RELATIF A LA DEMANDE DE BREVET EUROPEEN NO.

EP 03 35 8014

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-12-2003

| Document brevet cité au rapport de recherche | | Date de publication | Membre(s) de la famille de brevet(s) | | Date de publication |
|---|---|---|---|---|---|
| US 6316982 | B1 | 13-11-2001 | AUCUN | | |
| US 5436628 | A | 25-07-1995 | GB | 2281831 A ,B | 15-03-1995 |
| | | | JP | 2754170 B2 | 20-05-1998 |
| | | | JP | 7115362 A | 02-05-1995 |
| | | | SG | 94677 A1 | 18-03-2003 |
| US 3976945 | A | 24-08-1976 | CA | 1055124 A1 | 22-05-1979 |
| | | | DE | 2639326 A1 | 17-03-1977 |
| | | | GB | 1545953 A | 16-05-1979 |
| | | | JP | 1253123 C | 26-02-1985 |
| | | | JP | 52032250 A | 11-03-1977 |
| | | | JP | 59031897 B | 04-08-1984 |
| JP 04235616 | A | 24-08-1992 | AUCUN | | |

EPO FORM P0460

Pour tout renseignement concernant cette annexe : voir Journal Officiel de l'Office européen des brevets, No.12/82